# EUROPÄISCHE PATENTSCHRIFT

(11) **EP 0 624 131 B1**
(45) Veröffentlichungstag und Bekanntmachung des Hinweises auf die Patenterteilung: **05.03.1997**
(21) Anmeldenummer: 94901738.8
(22) Anmeldetag: 07.12.1993
(51) Int. Cl.: B60J 5/04

(54) **ROHRFÖRMIGER VERSTÄRKUNGSTRÄGER**
THE TUBULAR REINFORCING SUPPORT
SUPPORT TUBULAIRE DE RENFORCEMENT

(30) Priorität: 08.12.1992 DE 4241196
(43) Veröffentlichungstag der Anmeldung: 17.11.1994
(73) Patentinhaber: BENTELER AG, D-33104 Paderborn (DE)
(72) Erfinder: TÖPKER, Dieter, D-33100 Paderborn (DE); BÖHMER, Werner, D-34439 Willebadessen (DE)
(74) Vertreter: Bockermann, Rolf, Dipl.-Ing.
(86) Internationale Anmeldenummer: DE9301170
(87) Internationale Veröffentlichungsnummer: WO9413503

(56) Entgegenhaltungen:
- EP-A- 0 235 091
- EP-A- 0 330 759
- DE-A- 4 032 992
- US-A- 4 948 196

## Beschreibung

Die Erfindung betrifft einen rohrförmigen Verstärkungsträger für eine Kraftfahrzeugtür.

Durch die JP 1-47615 gemäß Patent Abstract of Japan M-833, 5. Juni 1989, Vol. 13, No. 237 ist ein Verstärkungsträger mit einem rechteckigen Querschnitt bekannt. Der Verstärkungsträger ist aus vier Platten zusammengesetzt. Auf die beiden sich parallel zur Richtung der Aufprallkraft erstreckenden Platten sind trapezförmige Versteifungsbleche flächig gesetzt. Die Breite der Versteifungsbleche ist schmaler als die Breite der zu ihnen parallelen Platten. Die längeren Schmalseiten der Versteifungsbleche erstrecken sich entlang der Verbindungskanten der zu ihnen parallel verlaufenden Platten mit der der Aufprallkraft zugewandten Platte. Die kürzeren Schmalseiten verlaufen mit geringem Abstand zu den Verbindungskanten zwischen den zu den Versteifungsblechen parallelen Platten und der der Aufprallkraft abgewandten Platte.

Wie schon der vorstehend beschriebene Verstärkungsträger dient auch der Verstärkungsträger der DE 40 32 992 A1 als Versteifung insbesondere der Tür eines Personenkraftwagens und soll im Falle eines seitlichen Aufpralls die Aufprallenergie aufnehmen und in mechanische Arbeit umwandeln. Hiermit wird eine erhöhte Sicherheit der Insassen von Personenkraftwagen angestrebt, und zwar unabhängig davon, ob ein anderes Fahrzeug seitlich auffährt oder ob z.B. bei einem ins Schleudern geratenen Personenkraftwagen dieser gegen einen Pfosten oder Mast prallt.

Im Hinblick auf den Sachverhalt, daß bei einem Aufprall der mittlere Längenabschnitt des Verstärkungsträgers den größten Beitrag für die Höhe des Arbeitsaufnahmevermögens beisteuert, ist im bekannten Fall vorgeschlagen worden, den mittleren Längenabschnitt unter Berücksichtigung der bekannten mathematischen Zusammenhänge zwischen Biegelinie und Widerstandsmoment mit einem im Vergleich zu den der Befestigung auf der Türinnenseite dienenden Endabschnitten mit einem größeren Widerstand gegen Biegebeanspruchungen auszurüsten. Dazu ist nicht nur der mittlere Längenabschnitt elliptisch oder oval verformt, sondern auch mit einer Metallhülse versehen worden, die vor der Verformung des mittleren Längenabschnitts ein- bzw. aufgeschoben wurde. Die Lagefixierung der Hülse wurde durch Kleben, Schweißen oder Löten bewirkt. Als Alternative für eine umfangsseitig geschlossene Hülse hat man ferner die Verwendung einer geschlitzten Hülse vorgeschlagen, die hinsichtlich ihrer Abmessungen so gewählt wird, daß eine Klemmwirkung eintritt. Darüberhinaus hat man entsprechend einer dritten Alternative die Wanddicke im mittleren Längenabschnitt größer als in den benachbarten Längenabschnitten bemessen oder auch den Innenraum des mittleren Längenabschnitts mit einem ein niedriges spezifisches Gewicht aufweisenden Mittel, wie z.B. einem Metalischaum oder Holz, gefüllt.

Allen diesen Maßnahmen zur Verstärkung des mittleren Längenabschnitts eines Verstärkungsträgers ist aber zu eigen, daß die Fertigung technisch aufwendig und ihre Lagefixierung kompliziert ist. Durchweg ist eine kostenintensive Einzelanfertigung eines Verstärkungsträgers nicht zu umgehen.

Die US-A-4 498 196 offenbart einen Verstärkungsträger für einen Personenkraftwagen, welcher zwei wellenförmig verformte Grundbleche aufweist, die zusammen zwei parallel zueinander verlaufende, miteinander verbundene Rohre bilden. Ein Grundblech ist länger als das andere Grundblech ausgebildet und endseitig abgeflacht. Im mittleren Längenbereich weist der Verstärkungsträger noch zwei unterschiedlich lange, sich zueinander parallel erstreckende Außenbleche auf, dessen Breite etwa der Breite der beiden Rohre entspricht. Dieser Verstärkungsträger erfordert eine aufwendige Herstellung.

Ausgehend von Stand der Technik liegt der Erfindung die Aufgabe zugrunde, einen rohrförmigen Verstärkungsträger dahingehend weiterzubilden, daß er auch im Hinblick auf diverse Türmodelle einfach zu fertigen sowie leicht zu montieren ist.

Die Lösung dieser Aufgabe besteht nach der Erfindung in den Merkmalen des Patentanspruchs.

Hierdurch ist nunmehr eine gewichtsoptimierte Versteifung für geschlossene Rohrquerschnitte, speziell kreisförmigen aber auch ovalen oder ellipsenförmigen Querschnitts, geschaffen worden, die gezielt eine Leichtbauweise mit geringer Einbautiefe einer Fahrzeugtür in Querrichtung, also der möglichen Belastungsrichtung bei einem Aufprall erlaubt. Es können jetzt extrem dünnwandige Verstärkungsträger eingesetzt werden, bei denen sichergestellt ist, daß die zur Befestigung auf der Türinnenseite dienenden Endabschnitte die zu erwartende Biegelast übertragen können, während der mittlere Längenabschnitt so versteift ist, daß die hier zu erwartende Biegelast ohne vorzeitiges Einknicken in Umformarbeit umgewandelt wird. In diesem Zusammenhang gestattet es die Erfindung in einer großen Variationsbreite, die Länge und/oder die Breite und/oder die Dicke der einander diametral gegenüberliegenden parallelen Stahlblechstreifen exakt auf die türspezifische Biegebeanspruchung des Verstärkungsträgers abzustimmen.

Die Erfindung erlaubt es gerade dort die Stahlblechstreifen vorzusehen, wo aufgrund von z.B. partiellen Einbaubeschränkungen in der Tür eines Kraftfahrzeugs ein z.B. im Querschnitt kreisförmiger Verstärkungsträger, mindestens eine Einprägung erhalten muß, die normalerweise den eigentlichen Trägerquerschnitt erheblich schwächt. In diesem Fall kann jetzt durch eine entsprechende Anpassung der Stahlblechstreifen eine notwendige Versteifung im Bereich der Einprägung vorgenommen werden.

Darüber hinaus wird ein Nachteil kompensiert, wenn die Einprägung durch eine Warmumformung erfolgt. In diesem Fall wird zwangsläufig eine Temperaturübergangszone zwischen jedem erwärmten, z.B. auf eine Temperatur oberhalb 800°C erwärmten Bereich und den angrenzenden nicht erwärmten Bereichen erzeugt, in der alle Temperaturstufen zwischen der Raumtemperatur und der Glühtemperatur im Material des Verstärkungsträgers auftreten. Dadurch verliert z.B. ein hochvergüteter Stahl seine hochfesten Eigenschaften, die aber Voraussetzung für die Wirksamkeit eines Verstärkungsträgers sind, um ausreichend große Umformarbeit im Falle eines Seitencrashs aufbringen zu können. Diese Temperaturübergangszone kann mit Hilfe der Erfindung jetzt durch eine gezielte Positionierung der Stahlblechstreifen abgedeckt werden, so daß die durch die partielle Erwärmung verursachte Schwächung des Verstärkungsträgers einwandfrei kompensiert wird.

Zusätzlich zu den vorstehend erwähnten Maßnahmen zur Schaffung eines größeren Biegewiderstands im mittleren Längenabschnitt eines Verstärkungsträgers kann als weiterer Parameter ergänzend die mechanisch-technologische Eigenschaft eingestellt werden, um bei verbesserter Umwandlung der Aufprallenergie in Verformungsarbeit Gewicht des Verstärkungsträgers einzusparen.

Die Erfindung ist nachfolgend anhand eines in der Zeichnung dargestellten Ausführungsbeispiels näher erläutert. Es zeigen:
- Figur 1: in der Seitenansicht den mittleren Längenabschnitt eines rohrförmigen Verstärkungsträgers für eine Kraftfahrzeugtür und
- Figur 2: einen vertikalen Querschnitt durch die Darstellung der Figur 1 entlang der Linie II-II.

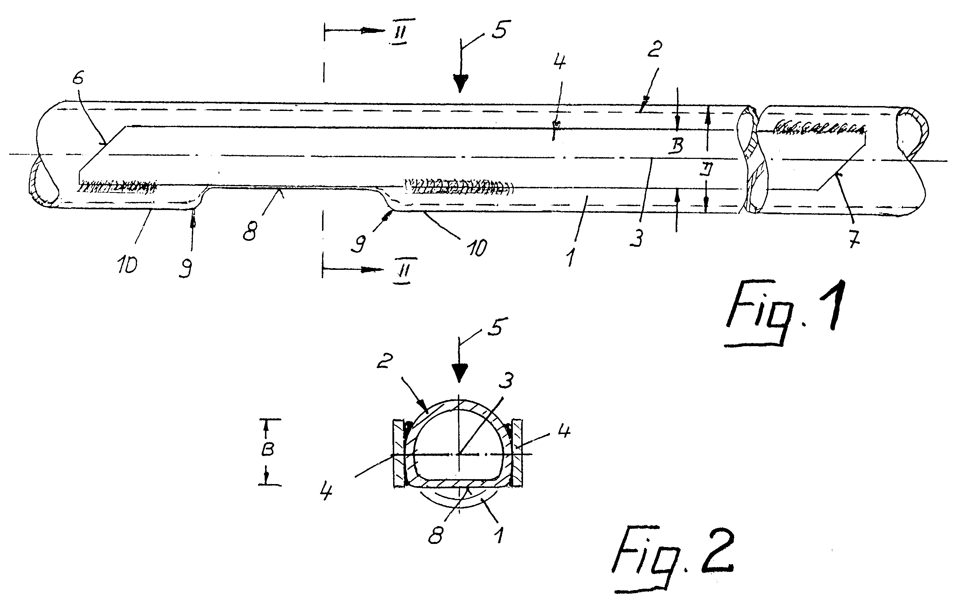

Mit 1 ist in der Figur 1 der mittlere Längenabschnitt eines rohrförmigen Verstärkungsträgers 2 für eine nicht näher dargestellte Kraftfahrzeugtür bezeichnet. Wie auch die Figur 2 in diesem Zusammenhang erkennen läßt, ist der Querschnitt des Verstärkungsträgers 2 sowohl bezüglich der Außenkontur als auch der Innenkontur kreisförmig.

Die nicht näher veranschaulichten Endabschnitte des Verstärkungsträgers 2 dienen der Befestigung auf der Türinnenseite.

Wie die Figuren 1 und 2 bei gemeinsamer Betrachtung erkennen lassen, sind im mittleren Längenabschnitt 1, also in dem Bereich, wo der Verstärkungsträger 2 bei einem Aufprall maximal auf Biegung beansprucht wird, zwei sich parallel zur Trägerlängsachse 3 erstreckende Stahlblechstreifen 4 in einer zur Aufprallrichtung 5 parallelen Ebene umfangsseitig tangential angeschweißt. Endseitig sind die Stahlblechstreifen 4 bei 6 und 7 leicht abgeschrägt. Dadurch ist ihre Kontur gewissermaßen parallelogrammförmig. Die Breite B der Stahlblechstreifen 4 ist schmaler als der Außendurchmesser D des Verstärkungsträgers 2 bemessen.

Der Verstärkungsträger 2 besitzt eine Einprägung 8 aufgrund einer partiellen Einbaueinschränkung in einer Kraftfahrzeugtür. Es ist zu erkennen, daß die beiden angeschweißten Stahlblechstreifen 4 die Tiefe der Einprägung 8 durch ihre Breite berücksichtigen. Mit Hilfe der Stahlblechstreifen 4 werden insbesondere die Problemzonen 9 zwischen der Einprägung 8 und den angrenzenden Bereichen 10 verstärkt.

### Bezugszeichenaufstellung

- 1 -: mittlerer Längenabschnitt
- 2 -: Verstärkungsträger
- 3 -: Trägerlängsachse
- 4 -: Stahlblechstreifen
- 5 -: Aufprallrichtung
- 6 -: Ende von 4
- 7 -: Ende von 4
- 8 -: Einprägung
- 9 -: Problemzone
- 10 -: angrenzende Bereiche
- B -: Breite von 4
- D -: Außendurchmesser von 2

## Patentansprüche

1. Rohrförmiger Verstärkungsträger für eine Kraftfahrzeugtür, der sowohl innen als auch außen gerundete Konturen aufweist, bei dein im mittleren Längenabschnitt (1) zwei Stahlblechstreifen (4) in zur Aufprallrichtung (5) parallelen Ebenen tangential an den Außenumfang geschweißt sind, und welcher auf der der Aufprallrichtung (5) abgewandten Seite mindestens eine Einprägung (8) aufweist, wobei die Breite (B) der Stahlblechstreifen (4) unter Berücksichtigung der Tiefe der Einprägung (8) schmaler als die Dicke (D) des Verstärkungsträgers (2) bemessen ist.

## Claims

1. A tubular reinforcement member for a vehicle door having rounded contours both internally and externally, wherein two sheet-steel strips (4) are welded tangentially to the outer periphery in the central portion of the length (1), in planes parallel to the impact direct (5), and which on the side remote from the impact direction (5) has at least one indentation (8), the width (B) of the sheet-steel strips (4), taking into account the depth of the indentation (8), being narrower than the thickness (D) of the reinforcement member (2).

## Revendications

1. Renforcement tubulaire pour une porte de véhicule automobile, présentant des contours arrondis aussi bien à l'intérieur qu'à l'extérieur, renforcement dans lequel sont soudées dans la section longitudinale médiane (1) deux bandes de tôle d'acier (4) dans des plans parallèles au sens d'impact (5) tangentiellement à la périphérie extérieure, et qui comporte sur le côté détourné du sens d'impact (5) au moins une dépression (8), la largeur (B) des bandes de tôle d'acier (4) étant dimensionnée en fonction de la profondeur de la dépression (8) de façon à être inférieure à l'épaisseur (D) du renforcement (2).
